# EUROPEAN PATENT SPECIFICATION

(11) **EP 0 311 417 B1**
(45) Date of publication and mention of the grant of the patent: **07.07.1993**
(21) Application number: 88309363.5
(22) Date of filing: 07.10.1988
(51) Int. Cl.: G06K 1/14, G06K 17/00, G06K 19/08

(54) **Processing apparatus for a portable storage medium**
Verarbeitungsvorrichtung für ein tragbares Speichermedium
Dispositif de traitement pour support de mémoire portatif

(30) Priority: 09.10.1987 JP 254983/87
(43) Date of publication of application: 12.04.1989
(73) Proprietor: KABUSHIKI KAISHA TOSHIBA, Kawasaki-shi, Kanagawa-ken 210 (JP)
(72) Inventor: Yoshinaga, Yoshio Patent Division, 1-chome Minato-ku Tokyo (JP)
(74) Representative: BATCHELLOR, KIRK & CO.

(56) References cited:
- EP-A- 0 088 591
- EP-A- 0 266 926
- FR-A- 2 566 325
- GB-A- 2 091 638
- US-A- 4 106 062

## Description

The present invention relates to a processing apparatus for a portable storage medium, used for instance as an integrated circuit (IC) 'smart' and to card issuing apparatus, which records data relating to the cardholder on the surface of the IC card as embossed data or as magnetic data.

In general, cards with magnetic stripes, so-called magnetic cards, used as credit cards can only store a small volume of data and have low security since their storage content can be easily read out.

Recently, a portable storage medium, a so-called IC card, which has high security against the read access of its storage content and also has a large storage capacity, has come into use. An IC card of this type is designed to house an IC chip which has at least a memory, and usually this is delivered from a card manufacturer to a card issuer in an unissued state. The IC card is personalized after predetermined data is written therein by the card issuer. Then, the IC card is given to a user.

The issuing of an IC card is carried out by writing predetermined data relating to the cardholder (for instance, cardholder name, address, telephone number, account number, expiration date, credit limit, etc.) into the memory housed in the unissued IC card and also by recording part of the above data (for instance, cardholder name, account number and expiration date) on the surface of the IC card as visible information, for instance embossed data. Furthermore, in the case of an IC card with a magnetic stripe, encoded data (magnetic data) with almost the same content as the above embossed data are also written on the magnetic stripe.

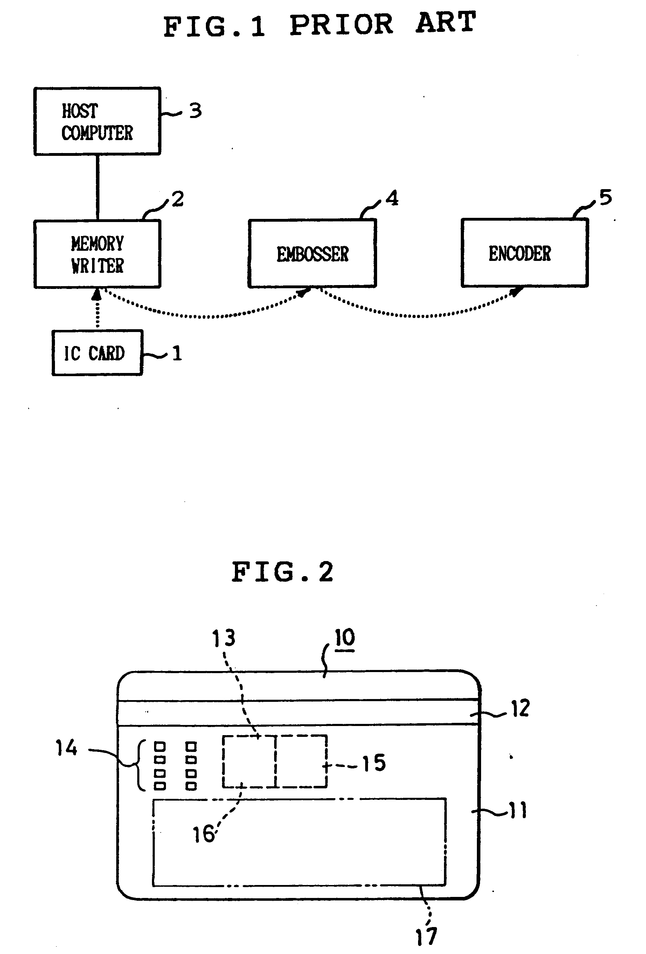

Until now, IC card processing apparatus for the purpose of issuing this type of IC card, such as that shown in FIGURE 1, is known. In FIGURE 1, reference numeral **1** denotes an unissued magnetic IC card with a magnetic stripe. A memory writer **2** writes data into the memory housed in the IC card and a host computer **3** controls memory writer **2**. An embosser **4** records embossed data on the surface of IC card **1**, and embosser **4** is independent of memory writer **2** and host computer **3**. An encoder **5** magnetically writes encoded data on the magnetic stripe provided on the surface of IC card **1**, and encoder **5** is also independent of memory writer **2** and host computer **3**.

In the above type of arrangement, first, identification information such as a serial number is manually noted on the surface of IC card **1** beforehand by an operator. Then, IC card **1** is inserted into memory writer **2** and, at the same time, the data relating to the cardholder which are to be written into the card are selected in host computer **3**. These are made the input data and are written into the memory in IC card **1** under the control of host computer **3**. Next, the identification information noted on IC card **1** to which data has been written is checked visually, and then IC card **1** is inserted into embosser **4**. At embosser **4**, the operator selects the data corresponding to that identification information and records that data by embossing the data as input data on the surface of IC card **1**. Next, the identification information noted on IC card **1** on which the embossed data has been recorded is again checked visually and IC card **1** is inserted into encoder **5**. At encoder **5**, the operator once again selects the data corresponding to that identification information and writes the encoded data as input data on the magnetic stripe of IC card **1**.

However, in the above type of conventional apparatus, in order to make the embossed data and the encoded data match the data written into the memory housed in the IC card, time must be taken to note the identification information on the surface of the IC card. Further, since the match between the embossed data or the encoded data and the data stored in the memory of the IC card is obtained by checking the identification information visually, there is a problem in that human errors can easily occur resulting in mismatches of the data.

The reader may be further enlightened by the disclosures in GB-A-2 091 638, where a central unit controls the transfer of the contents of a data record to an overwritable and a non-overwritable memory, and FR-A-2 566 325, where image data is scanned on one side of a card and the scanned data are printed on the other side.

It is an object of the present invention to provide a processing apparatus for a portable storage medium which can prevent a mismatch between the data to be recorded on the surface of the portable storage medium and the data stored in the memory housed in the portable storage medium, thus obtaining a portable storage medium with high security and accuracy.

According to the present invention there is provided a processing apparatus for personalising a portable storage medium comprising a memory and at least one other recording medium consisting of either a planar surface whereon data can be visibly recorded and/or a magnetic recording portion said apparatus comprising a visible recording means to record personalising data visibly on the planar surface, and/or a magnetic recording means to record the personalising data on the magnetic recording portion, and a memory reader to read said personalising data recorded in the memory, connected to supply said personalising data to the recording means.

Another aspect of the invention comprises a process according to claim 7.

The visible recording means may include means for embossing the data on the surface of the portable storage medium.
FIGURE 1 is a block diagram showing a processing apparatus for a portable storage medium in the prior art;
FIGURE 2 is a plan view showing an IC card as a portable storage medium;
FIGURE 3 is a map of the memory housed in the IC card showing the data relating to the cardholder which are stored in the memory;
FIGURE 4 is a plan view showing an example of the format of the embossed data recorded on the surface of the IC card;
FIGURE 5 is a block diagram showing a processing apparatus for a portable storage medium according to the present invention; and
FIGURE 6 is a flow chart for explaining an operation of the processing apparatus according the present invention.

An embodiment of the present invention will now be described with reference to the accompanying drawings.

**FIGURE 2** shows an IC card **10** with a magnetic stripe as an example of a portable storage medium according to the present invention. A card body **11** is formed of a thin plastic plate having a rectangular shape. A magnetic stripe **12** extending along the longitudinal direction of the card is formed on one side portion of the surface of card body **11**. An IC (integrated circuit) **13** is embedded in card body **11**. IC **13** is connected electrically with a contactor **14** including plural number of contacts formed on the surface of card body **11** for electrical communication with an external device (not shown). IC **13** comprises a memory (e.g., an EEPROM) **15** and a controller (e.g., a microprocessor) **16** for the control of memory **15**. Data written to or read from memory **15** are input/output via contactor **14**. An embossing area **17** is defined on a prescribed portion on the surface of card body **11**, and one to five lines of data are embossed on embossing area **17**.

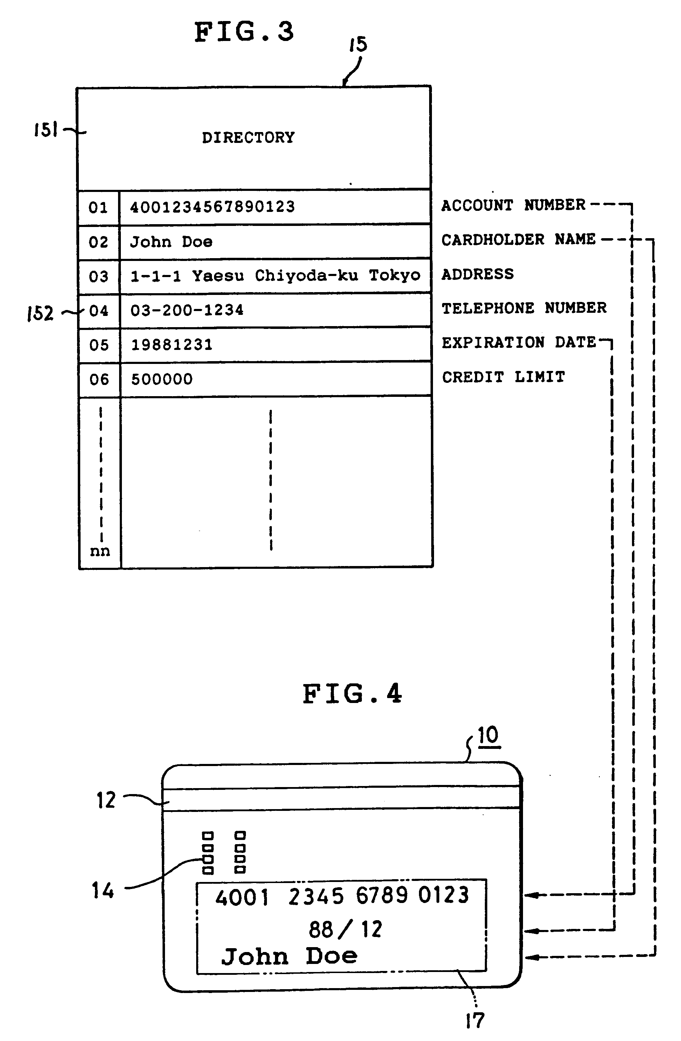

Memory **15**, as shown in **FIGURE 3**, is broadly divided into the two areas of a directory area **151** and a data area **152**. Directory area **151** is an area which divides data area **152** into a number of defined areas and controls these areas in which area defined information is stored. Each of the divided and defined areas of data area **152** is given its respective area number. In the each area corresponding to the each area number, data relating to the cardholder, for instance, an account number, a cardholder name, an address, a telephone number, an expiration date and a credit limit are stored.

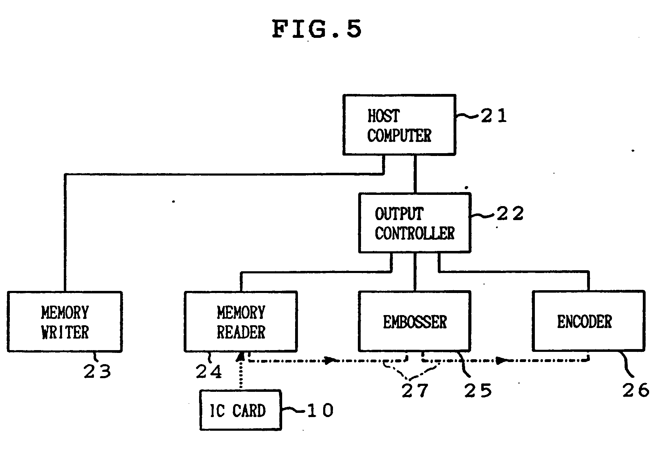

**FIGURE 5** shows a block diagram of an IC card processing apparatus as an example of a processing apparatus for a portable storage medium according to the present invention. A host computer **21** is connected to an output controller **22** and a memory writer **23**. Output controller **22** performs personalization control of an IC card, i.e., control for reading data from a memory housed in the IC card, control for forming embossed data on the IC card, control for magnetic writing encoded data on a magnetic stripe of the IC card. Memory writer **23** receives data relating to the cardholder, as shown in **FIGURE 3**, and writes the data into memory **15** of IC card **10**. Output controller **22** is connected to a memory reader **24**, an embosser **25** and an encoder **26** to control the operation of memory reader **24**, embosser **25** and encoder **26**, respectively. Memory reader **24** reads data from memory **15** housed in IC card **10**. Embosser **25** records embossed data on the surface of IC card **10**. Encoder **26** writes magnetically encoded data to magnetic stripe **12** provided on the surface of IC card **10**. A conveying path **27** is provided between memory reader **24**, embosser **25** and encoder **26** for automatically conveying IC card **10** between memory reader **24** and embosser **25**, and between embosser **25** and encoder **26**, in sequence. Conveying path **27** comprises, for instance, a plurality of rollers and belts (not shown) which are well known to those skilled in the art.

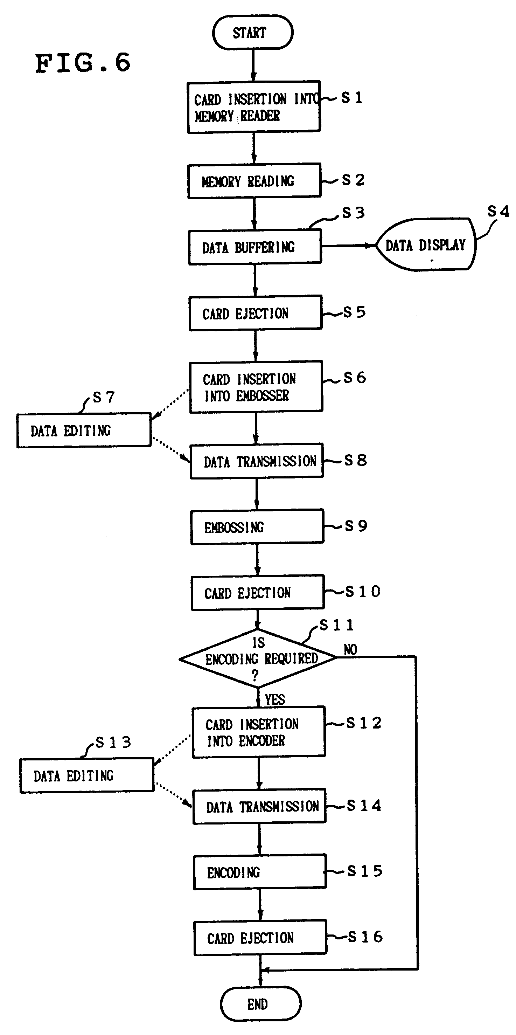

The operation of the apparatus with the above arrangement will now be described with reference to the flow chart shown in **FIGURE 6**. The data relating to the cardholder, such as shown in **FIGURE 3**, have previously been written into memory **15** of IC card **10** by memory writer **23**. First, when host computer **21** is started, a guide message "Insert Card" is displayed on a display (not shown), and the operator therefore inserts IC card **10** into memory reader **24** (Step **S1**). Then, based on the control of output controller **22**, memory reader **24** reads the data in areas 01, 02 and 05 (shown in **FIGURE 3**), that is, "ACCOUNT NUMBER", "CARDHOLDER NAME" and "EXPIRATION DATE", from memory **15** of IC card **10** via contactor **14** (Step **S2**), and transmits them to output controller **22**. Output controller **22** buffers the received data and at the same time, if necessary, displays them on a display for checking (Steps **S3** and **S4**). Memory reader **24** ejects IC card **10** after it has transmitted the data to output controller **22** (Step **S5**).

Then, IC card **10** is automatically conveyed to embosser **25** through conveying path **27** and inserted into embosser **25** (Step **S6**). Prior to this operation, the embossing location of IC card **10** already have been set in embosser **25** by the command from output controller **22** to embosser **25**. Also, when the format of the data read from memory **15** differs from the format of the embossing data or the encoding data, it is necessary to edit the data which are buffered in output controller **22** (Step **S7**). After the insertion of characters such as spaces or slashes into, and/or the transposition of characters in the data read from memory **15** by editing, the edited data is transmitted to embosser **25** (Step **S8**). Then embosser **25**, under the control of output controller **22**, carries out the embossed stamping of the edited data in embossing area **17** of IC card **10**, as shown in **FIGURE 4**, using a specified character font (Step **S9**). After it has completed the embossing, embosser **25** ejects IC card **10** (Step **S10**).

After the above operation, when encoding is required, IC card **10** is automatically conveyed to encoder **26** and inserted into encoder **26** (Steps **S11** and **S12**). When this operation is done, under the control of output controller **22** and following the same sequence as in the case of embossing, after the data have been edited, encoded data are written into magnetic stripe **12** of IC card **10** (Steps **S13** - **S15**). In this case, since, generally, there is more information in the encoded data than in the embossed data, the data to be encoded, for instance, "CREDIT LIMIT" in area number 06, must also be read out when reading the memory (Step **S2**), and buffered in output controller **22**. On completion of encoding, encoder **26** ejects IC card **10** (Step **S16**).

When IC card **10** is ejected from encoder **26**, encoder **26** transmits a signal, which provides a completion of the operation for embossing and encoding to IC card **10**, to output controller **22**. By this done, output controller **22** permits to read the data from memory **15** of the following IC card **10** by memory reader **24**.

In this way, the data are read from a memory housed in an IC card in whose memory data have been stored beforehand. Then, by using these read out data, as they stand, as embossing data and encoding data, there is no requirement to manually or visually note identification information on the surface of an IC card in order to obtain a data match. Thus, as well as being labor-saving, the apparatus produces an IC card with high security without the occurrence of mismatches between the data written into the memory housed in the IC card and the embossed data and encoded data.

Also, since the process of reading out the data in the memory housed in the IC card itself is a check of the data written into the memory and the correctness of the IC card, the quality of the IC card can also be guaranteed. Moreover, since the embossing data and encoding data are prepared and transmitted automatically without any manual operation, an accurate and speedy process becomes possible. Furthermore, since output controller **22** allows processing of the following IC card immediately after the completion of processing for a preceding IC card **10**, even if trouble occurs during processing, there is no risk of the data from the immediately preceding card being input into the next IC card, and the accuracy of the data can be guaranteed.

In the embodiment described above, an example has been explained in which the IC card is automatically conveyed through the conveying path between the memory reader, the embosser and the encoder. However, the IC card may be manually transferred by an operator between the memory reader, the embosser and the encoder, or the reader may be combined with the embosser and encoder.

Also, in the above embodiment, the case where the visible data recorded on the surface of the IC card are embossed data has been described. However, the present invention is not limited to this, and printed character data may also be used.

Moreover, in the above embodiment, the case of the portable storage medium being an IC card with a magnetic stripe has been explained. However, the present invention is not limited to this, and it may for instance be an IC card without a magnetic stripe or an optical memory card which is known as a laser memory card.

According to the present invention as described above, it is possible to prevent mismatches between the data written into the memory housed in a portable storage medium and the data recorded on the surface of the portable storage medium without the necessity of noting identification information in order to obtain a data match. Thus a processing apparatus for a portable storage medium can be provided by which a portable storage medium with high security can be obtained.

## Claims

1. A processing apparatus for personalising a portable storage medium comprising a memory (15) and at least one other recording medium consisting of either a planar surface whereon data can be visibly recorded and/or a magnetic recording portion (12), said apparatus comprising a visible recording means (25) to record personalising data visibly on the planar surface, and/or a magnetic recording means (26) to record the personalising data on the magnetic recording portion (12), and a memory reader (24) to read said personalising data recorded in the memory (15), connected to supply said personalising data to the recording means (25; 26).

2. Apparatus according to claim 1 including a memory writer (23) to write the personalising data to the memory (15).

3. Apparatus according to claim 1 or claim 2 wherein the visible recording means (25) is an embosser (25).

4. Apparatus according to any one of the preceding claims wherein the data includes a data portion relating to an entity to which the portable storage medium (10) will be issued and the memory reader (24) includes means (22) for selecting the data portion from the data stored in the memory (15).

5. Apparatus according to any one of the preceding claims wherein the memory reader (24) is spaced from the recording means and the apparatus includes a conveyer (27) for automatically conveying the portable storage medium (10) between the memory reading means (24) and the recording means (25; 26).

6. Apparatus according to any one of the preceding claims wherein the memory (15) is an integrated circuit memory.

7. A process for personalising a portable storage medium (10) having a memory (15) comprising the steps of:
reading out the personalising data from the memory (15); and
automatically, visibly recording the data read out onto a planar surface of the medium (10) or magnetically recording said data onto a magnetic recording portion of the medium.

## Patentansprüche

1. Verarbeitungsvorrichtung zur Personalisierung eines tragbaren Speichermediums mit einem Speicher (15) und mit mindestens einem weiteren Aufzeichnungsmedium, das entweder aus einer ebenen Fläche besteht, auf der Daten sichtbar aufgezeichnet werden können und/oder einem Magnetaufzeichnungsteil (12), wobei die Vorrichtung ein sichtbares Aufzeichnungsmittel (25), um Personalisierungsdaten sichtbar auf der ebenen Oberfläche aufzuzeichnen, und/oder ein Magnetaufzeichnungsmittel (26) zum Aufzeichnen der Personalisierungsdaten auf dem Magnetaufzeichnungsteil (12), und einen Speicherleser (24) zum Lesen der Personalisierungsdaten aufweist, die in dem Speicher (15) aufgezeichnet sind, der so angeschlossen ist, daß die Personalisierungsdaten an das Aufzeichnungsmittel (25; 26) geliefert werden.

2. Vorrichtung nach Anspruch 1 mit einem Speicherschreiber (23), um die Personalisierungsdaten in den Speicher (15) zu schreiben.

3. Vorrichtung nach Anspruch 1 oder 2, wobei das sichtbare Aufzeichnungsmittel (25) eine Prägeeinrichtung (25) ist.

4. Vorrichtung nach einem der vorhergehenden Ansprüche, wobei die Daten einen Datenbereich umfassen, der einer Person zugeordnet ist, an die das tragbare Speichermedium (10) ausgegeben wird, und wobei der Speicherleser (24) Mittel (22) zum Auswählen der Datenteile aus den im Speicher (15) gespeicherten Daten aufweist.

5. Vorrichtung nach einem der vorhergehenden Ansprüche, wobei der Speicherleser (24) von dem Aufzeichnungsmittel beabstandet ist und die Vorrichtung einen Förderer (27) aufweist, um das tragbare Speichermedium (10) automatisch zwischen dem Speicherlesemittel (24) und dem Aufzeichnungsmittel (25, 26) zu transportieren.

6. Vorrichtung nach einem der vorhergehenden Ansprüche, wobei der Speicher (15) ein integrierter Halbleiterspeicher ist.

7. Verfahren zum Personalisieren eines tragbaren Speichermediums (10), das einen Speicher (15) besitzt, mit den Schritten:
Auslesen der personalisierten Daten aus dem Speicher (15); und
automatisches, sichtbares Aufzeichnen der ausgelesenen Daten auf einer ebenen Oberfläche des Mediums (10) oder magnetisches Aufzeichnen der Daten auf einem Magnetaufzeichnungsteil des Mediums.

## Revendications

1. Dispositif de traitement pour personnaliser un support de mémoire portatif qui comprend une mémoire (15) et, au moins, un autre support d'enregistrement constitué soit par une surface plane sur laquelle des données ou des informations peuvent être enregistrées de manière visible et/ou un support d'enregistrement magnétique (12), ledit appareil comprenant des moyens d'enregistrement visibles (25) pour mémoriser des données de personnalisation de manière visible sur ladite surface plane et/ou des moyens d'enregistrement magnétiques (26) pour inscrire les données de personnalisation sur le support d'enregistrement magnétique (12) et un lecteur (24) pour lire lesdites données de personnalisation enregistrées dans la mémoire (15), connecté de façon à fournir lesdites données de personnalisation aux moyens d'enregistrement (25, 26).

2. Dispositif de traitement selon la revendication 1, caractérisé par un dispositif d'écriture (13) pour entrer les données de personnalisation dans la mémoire (15).

3. Appareil selon la revendication 1 ou 2, caractérisé en ce que les moyens d'enregistrement visibles comprennent un dispositif d'estampage (25).

4. Appareil selon l'une quelconque des revendications précédentes, caractérisé en ce que les données comprennent une partie se rapportant à l'entité à laquelle le support de mémoire portatif (10) est appelé à être délivré, et en ce que le lecteur (24) comporte des moyens (22) pour sélectionner la partie voulue des données contenues dans la mémoire (13).

5. Appareil selon l'une quelconque des revendications précédentes, caractérisé en ce que le lecteur (24) est espacé des moyens d'enregistrement et en ce que l'appareil comporte un convoyeur (27) pour transporter automatiquement le milieu de mémoire portatif (10) entre les moyens de lecture de mémoire (24) et les moyens d'enregistrement (25, 26).

6. Appareil selon l'une quelconque des revendications précédentes, caractérisé en ce que la mémoire (15) est du type "à circuit intégré".

7. Procédé pour personnaliser un support de mémoire portatif (10) possédant une mémoire (15) qui consiste :
à lire les données ou les informations de personnalisation de la mémoire (15) ; et
à enregistrer automatiquement de manière visible les données ou les informations ainsi lues sur une surface plane du support (10) ou à enregistrer par voie magnétique lesdites données sur la partie d'enregistrement appropriée dudit support.
